# EUROPÄISCHE PATENTANMELDUNG

(11) **EP 1 380 827 A2**
(43) Veröffentlichungstag der Anmeldung: **14.01.2004**
(21) Anmeldenummer: 03014129.5
(22) Anmeldetag: 24.06.2003
(51) Int. Cl.: G01M 3/22, G01M 3/28

(54) **Vorrichtung zum Prüfen der Dichtheit von Fahrzeug-Drehgelenken**

(30) Priorität: 11.07.2002 DE 10231553
(71) Anmelder: Deutsche Montan Technologie GmbH, 45307 Essen (DE)
(72) Erfinder: Staniullo, Hans-Josef, 44628 Herne (DE); Müller, Otto-Josef, 46284 Dorsten (DE); Makowka,Robert, 45739 Oer-Erkenschwick (DE)

(57) **Zusammenfassung**

Vorrichtung zum Prüfen der Dichtheit von Fahrzeug-Drehgelenken, bei dem in einem Prüfgehäuse die Drehgelenke in alle drei Dimensionen bewegt werden und die Dichtigkeit geprüft wird, und ein Gelenkkopf (2) mit einem Adapter (3), der mit dem Prüfgehäuse fest verbunden ist, in einer Gelenkpfanne (1) mit einer horizontalen Achse (5) und einem Adapter (4) angeordnet ist, wobei die horizontale Achse (5) in einem horizontalen Führungselement (6) mit einem Kippgelenk (10) und einer vertikalen Achse (7) geführt ist, und die vertikale Achse (7) mit einem vertikalen Führungselement (8) auf einer Drehscheibe (11) mit einer Drehachse (9) derartig angeordnet ist, dass durch die Drehung der Drehscheibe (11) und die Auf- und Abbewebung der vertikalen Achse (7) mit dem Kippgelenk (10) das Drehgelenk in alle drei Dimensionen bewegbar ist.

## Beschreibung

Die Erfindung betrifft eine Vorrichtung zum Prüfen der Dichtheit von Fahrzeug-Drehgelenken gemäß dem Oberbegriff des Anspruchs 1.

Bei derartigen Vorrichtungen sind Prüfstände bekannt, die zwei bewegte Achsen aufweisen. So ist bei einem bekannten Prüfstand der Gelenkkopf des Drehgelenkes mit einem Adapter und einer vertikalen Achse verbunden, welche eine Drehbewegung +/-180° um eine Drehachse ausführt. Die Gelenkpfanne des Drehgelenkes ist durch einen weiteren Adapter an einer horizontalen Achse befestigt, die um eine Drehachse (+/- 30°) gekippt werden kann. Durch die Bewegung der beiden Achsen ist es möglich, die Drehgelenke in alle drei Dimensionen zu bewegen.

Bei diesem Prüfstand ist es von Nachteil, dass die vertikale und die horizontale Achse jeweils in axialer Richtung beweglich sein müssen, damit die Fertigungstoleranzen (Drehachse außerhalb des Drehpunktes) ausgeglichen werden. Dies hat außerdem zur Folge, dass die Lage des Drehgelenkes nicht 100%ig genau definiert ist. Das bedeutet, dass jedes Drehgelenk bei der Prüfung unterschiedliche Startparameter aufweisen kann bzw. wenn die Anpassung nicht 100%ig gelingt, wird das Drehgelenk zusätzlich beansprucht und kann evtl. sogar verklemmen kann.

Nach der Belastung des Drehgelenkes wird die Dichtigkeitsprüfung durch Ausbau und visuelle Kontrolle vorgenommen. Diese Art der Dichtigkeitsprüfung ist sehr aufwendig.

Der Erfindung liegt die Aufgabe zugrunde, eine Vorrichtung zum Prüfen der Dichtheit von Fahrzeug-Drehgelenken bereitzustellen, bei der nur eine Achse bewegt wird und demzufolge auf Fertigungstoleranzen keine Rücksicht genommen werden muss und bei dem die Dichtigkeit des Drehgelenkes kontinuierlich geprüft und gemessen werden kann.

Diese Aufgabe wird durch die Merkmale des Patentanspruchs 1 gelöst.

Eine Weiterbildung ergibt sich aus den Merkmalen des Patentanspruchs 2.

Im Hinblick auf die Dichtigkeitsprüfung wird die Aufgabe durch die Merkmale der Patentansprüche 3 und 4 gelöst.

Gemäß der Erfindung wird bei der Vorrichtung der Gelenkkopf des Drehgelenkes mit einem Adapter, der mit dem Prüfgehäuse fest verbunden ist, gehalten. Die Gelenkpfanne des Drehgelenkes ist über einen weiteren Adapter und einer horizontalen Achse mit einem Führungselement verbunden: Dieses Führungselement ist über eine Kippachse mit einer vertikalen Achse verbunden. Die horizontale Achse kann somit um +/- 30° gekippt werden.

Die vertikale Achse wird mit einem Führungselement, das auf einer Drehscheibe befestigt ist, geführt. Dadurch kann die vertikale Achse um die Drehachse der Drehscheibe mit +/- 180° geschwenkt werden. Die vertikale Achse ist außerdem auf- und ab- bewegbar ausgeführt.

Auf diese Art und Weise kann bei der erfindungsgemäßen Vorrichtung das zu prüfende Drehgelenk in drei Dimensionen bewegt werden.

Bei dieser Vorrichtung kann durch die Bewegung einer einzigen Achse das Drehgelenk in alle Richtungen bewegt werden. Auf Fertigungstoleranzen muss keine Rücksicht genommen werden, außerdem ist die Position des Drehgelenkes durch die feste Verbindung mit dem Prüfgehäuse 100%ig definiert.

Gemäß einer Weiterbildung der Erfindung wird die Drehscheibe in dem Prüfgehäuse schräg angeordnet und die vertikale Achse mit der Drehscheibe fest verbunden. Bei einem Drehen der schrägen Drehscheibe führt die vertikale Achse eine Auf- und Ab-Bewegung aus. Diese Anordnung hat den Vorteil, dass auf einen Motor für das auf und ab bewegen der vertikalen Achse verzichtet werden kann.

Gemäß Anspruch 3 kann die Dichtigkeit der Gummimuffe dadurch geprüft werden, dass über eine Gasleitung in das Drehgelenk im Bereich der Gummimuffe ein Gas aus einem Gasdruckbehälter eingeleitet wird. In dem Prüfgehäuse sind Gassensoren angeordnet. Wenn aufgrund von Undichtigkeiten das Gas austritt, stellen dies die Gassensoren fest und über eine Steuerung wird der Prüfstand angehalten.

Die Dichtigkeitsprüfung kann auch über eine Druckmessung erfolgen. Sobald eine Druckmessdose einen Druckabfall anzeigt, wird über die Steuerung der Prüfstand angehalten.

Die vorgenannten sowie die beanspruchten und in den Ausführungsbeispielen beschriebenen erfindungsgemäß zu verwendenden Bauteile unterliegen in ihrer Größe, Formgestaltung und Materialauswahl sowie technischen Konzeption keinen besonderen Ausnahmebedingungen, so dass die in dem Anwendungsgebiet bekannten Auswahlkriterien uneingeschränkt Anwendung finden können.

Weitere Einzelheiten und Merkmale sowie Vorteile des Gegenstandes der Erfindung ergeben sich aus den Ansprüchen sowie aus der nachfolgenden Beschreibung der zugehörigen Zeichnung, in der beispielhaft bevorzugte Ausführungsbeispiele der Vorrichtung zum Prüfen der Dichtheit von Fahrzeug-Drehgelenken dargestellt sind.

In der Zeichnung zeigen
- Figur 1: eine dreidimensionale Darstellung einer Vorrichtung gemäß dem Stand der Technik
- Figur 2: eine dreidimensionale Darstellung der erfindungsgemäßen Vorrichtung
- Figur 3: eine schematische Darstellung der Dichtigkeitsprüfung und
- Figur 4: eine weitere schematische Darstellung der Dichtigkeitsprüfung

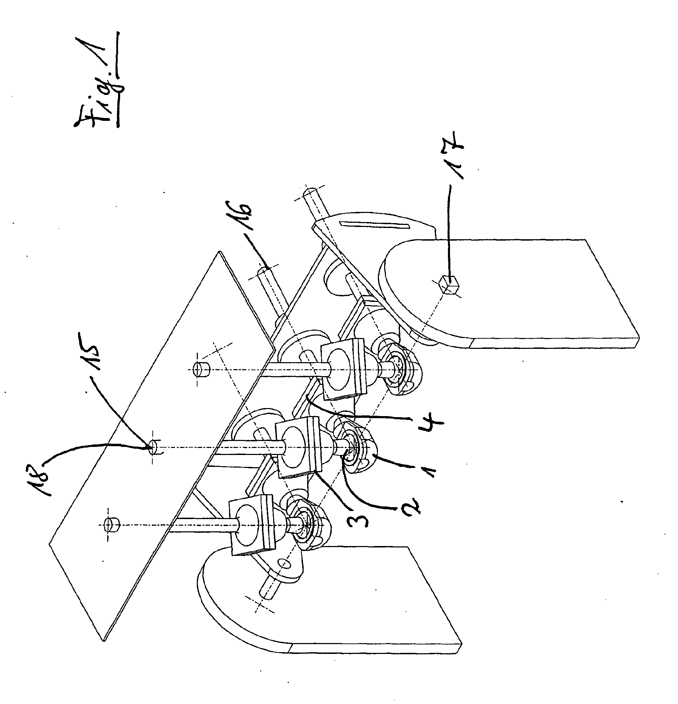

Aus der Figur 1 geht hervor, dass ein Gelenkkopf 2 mit einem Adapter 3 und einer vertikalen Achse 15 verbunden ist, die eine Drehbewegung um eine Drehachse 18 ausführen kann. Eine Gelenkpfanne 1 ist durch einen Adapter 4 an einer horizontalen Achse 16 befestigt. Die horizontale Achse 16 kann um eine Drehachse 17 gekippt werden. Bei dieser bekannten Vorrichtung sind somit zwei bewegte Achsen 15 und 16 nötig, um die Drehgelenke in alle drei Dimensionen bewegen zu können.

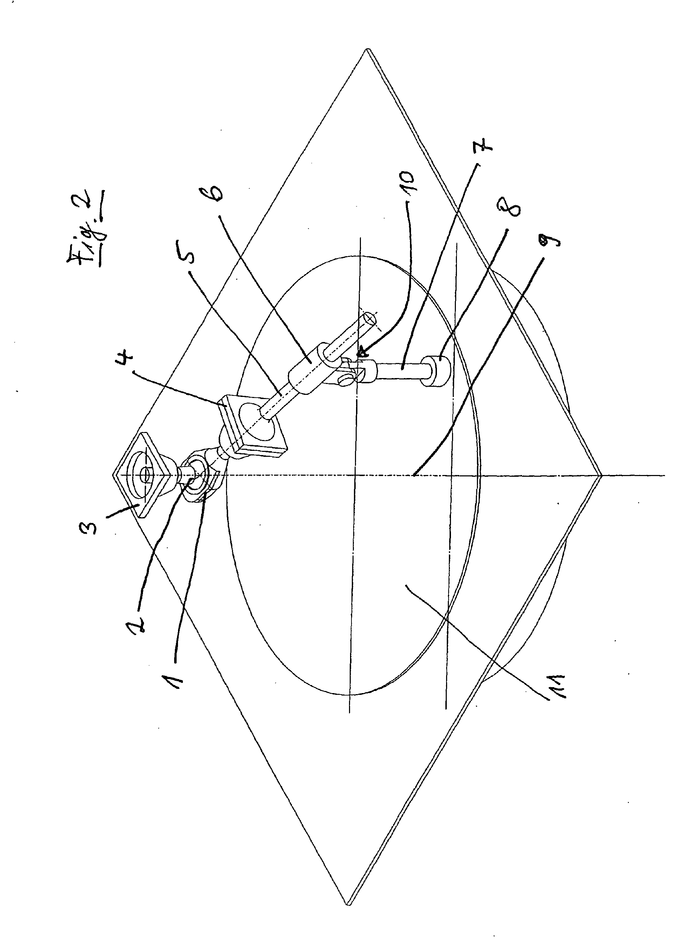

Aus der Figur 2 geht hervor, dass der Gelenkkopf 2 mit einem Adapter 3 verbunden ist. Dieser Adapter 3 ist mit dem nicht dargestellten Prüfgehäuse fest verbunden. Die Gelenkpfanne 1 ist über dem Adapter 4 mit der horizontalen Achse 5 verbunden. Die horizontale Achse 5 wird in einem Führungselement 6 geführt. Die horizontale Achse 5 kann um ca. +/- 30° gekippt werden. Dazu ist das horizontale Führungselement 6 über ein Kippgelenk 10 mit einer vertikalen Achse 7 verbunden. Die vertikale Achse 7 ist über ein vertikales Führungselement 8 mit einer Drehscheibe 11 mit einer Drehachse 9 verbunden. Bei Drehung der Drehscheibe 11 kann die vertikale Achse 7 um +/- 180° geschwenkt werden.

Bei dieser Vorrichtung kann durch die Bewegung einer einzigen Achse das Drehgelenk in alle Richtungen bewegt werden. Auf Fertigungstoleranzen muss keine Rücksicht genommen werden, außerdem ist die Position des Drehgelenkes durch die feste Verbindung mit dem Prüfgehäuse 100%ig definiert.

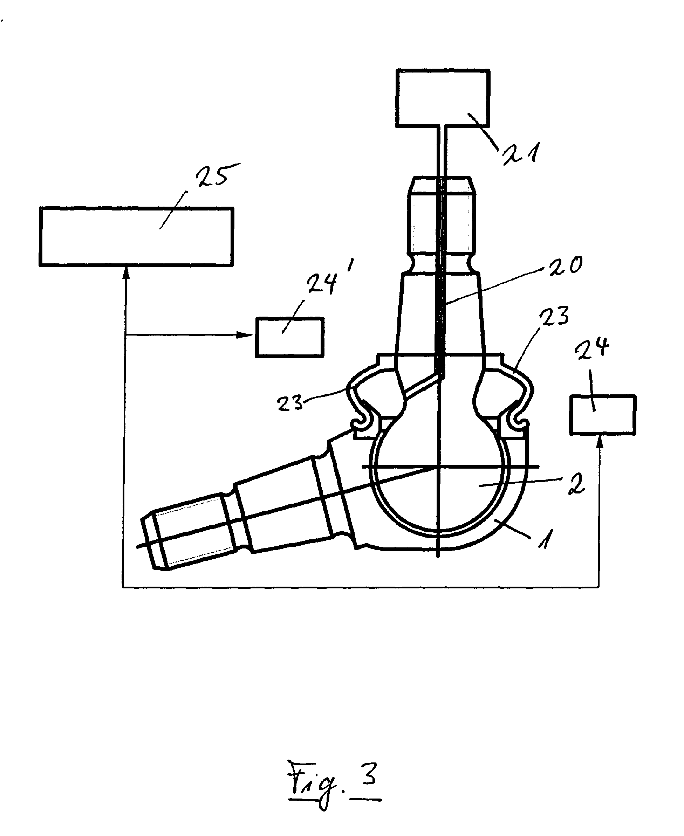

In der Figur 3 ist die Prüfung der Dichtigkeit des Drehgelenkes schematisch dargestellt. In dem Gelenkkopf 2 ist eine Gasleitung 20 mit einem Gasdruckbehälter 21 angeordnet, die im Bereich der Gummimuffe 23 des Drehgelenkes endet. In dem Prüfgehäuse sind Gassensoren 24 und 24' angeordnet. Wenn aufgrund von Undichtigkeiten das Gas austritt, wird dies durch die Gassensoren 24 und 24' festgestellt und an eine Steuerung 25 weitergeleitet, mit der der Prüfstand angehalten wird.

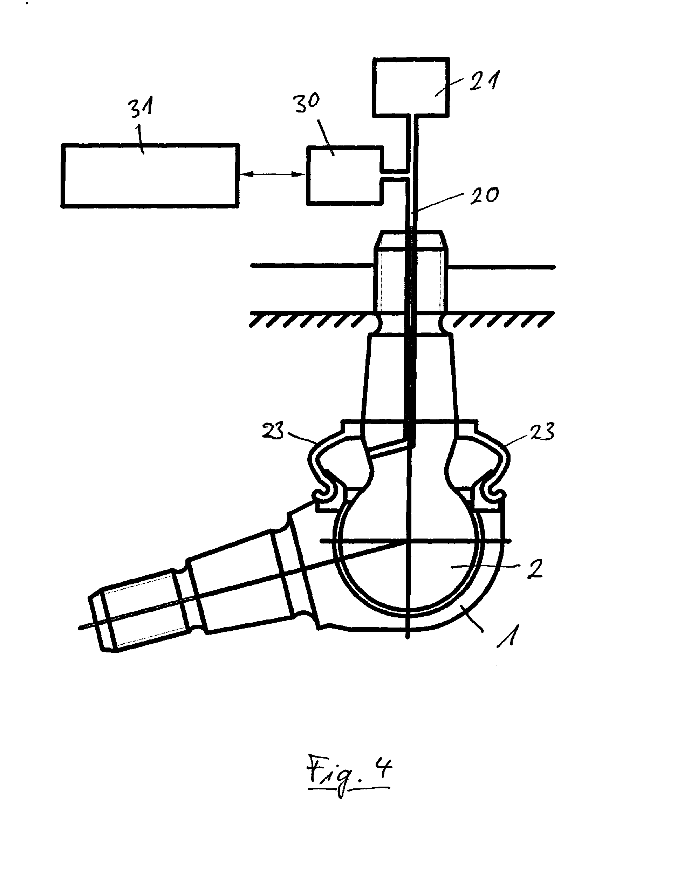

Aus der Figur 4 geht hervor, dass an die Gasleitung 20 eine Druckmessdose 30 angeschlossen ist. Bei einem Abfall des Druckes aufgrund von Undichtigkeiten wird dies durch die Druckmessdose 30 registriert und an eine Steuerung 31 weitergegeben, die den Prüfstand stoppt, wenn der Druck unter einen vorgegebenen Minimaldruck fällt.

### Bezugszeichenliste

- 1: Gelenkpfanne
- 2: Gelenkkopf
- 3: Adapter
- 4: Adapter
- 5: horizontale Achse
- 6: horizontales Führungselement
- 7: vertikale Achse
- 8: vertikales Führungselement
- 9: Drehachse
- 10: Kippgelenk
- 11: Drehscheibe
- 15: vertikale Achse
- 16: horizontale Achse
- 17: Drehachse
- 18: Drehachse
- 20: Gasleitung
- 21: Gasdruckbehälter
- 23: Gummimuffe
- 24: Gassensoren
- 24': Gassensoren
- 25: Steuerung
- 30: Druckmessdose
- 31: Steuerung

## Patentansprüche

1. Vorrichtung zum Prüfen der Dichtheit von Fahrzeug-Drehgelenken, bei dem in einem Prüfgehäuse die Drehgelenke in alle drei Dimensionen bewegt werden und die Dichtigkeit geprüft wird, **dadurch gekennzeichnet, dass** ein Gelenkkopf (2) mit einem Adapter (3), der mit dem Prüfgehäuse fest verbunden ist, in einer Gelenkpfanne (1) mit einer horizontalen Achse (5) und einem Adapter (4) angeordnet ist, wobei die horizontale Achse (5) in einem horizontalen Führungselement (6) mit einem Kippgelenk (10) und einer vertikalen Achse (7) geführt ist, und die vertikale Achse (7) mit einem vertikalen Führungselement (8) auf einer Drehscheibe (11) mit einer Drehachse (9) derartig angeordnet ist, dass durch die Drehung der Drehscheibe (11) und die Auf- und Abbewebung der vertikalen Achse (7) mit dem Kippgelenk (10) das Drehgelenk in alle drei Dimensionen bewegbar ist.

2. Vorrichtung nach Anspruch 1, **dadurch gekennzeichnet, dass** die Drehscheibe (11) in dem Prüfgehäuse schräg angeordnet ist und die vertikale Achse (7) mit dem Kippgelenk (10) fest mit der Drehscheibe (11) verbunden ist, so dass bei einer Drehbewegung der Drehscheibe (11) die vertikale Achse (7) auf und ab bewegbar ist.

3. Vorrichtung zum Prüfen der Dichtheit von Fahrzeug-Drehgelenken, bei dem in einem Prüfgehäuse die Drehgelenke in alle drei Dimensionen bewegt werden und die Dichtigkeit geprüft wird, **dadurch gekennzeichnet, dass** der Gelenkkopf (2) eine Gasleitung (20) mit einem Gasdruckbehälter (21) aufweist, die in dem Bereich der Gummimuffe (23) des Drehgelenkes endet und in dem Prüfgehäuse Gassensoren (24, 24') zum Erkennen von Undichtigkeiten, die mit einer Steuerung (25) zum Anhalten des Prüfstandes verbunden sind, vorgesehen sind.

4. Vorrichtung zum Prüfen der Dichtheit von Fahrzeug-Drehgelenken, bei dem in einem Prüfgehäuse die Drehgelenke in alle drei Dimensionen bewegt werden und die Dichtigkeit geprüft wird, **dadurch gekennzeichnet, dass** der Gelenkkopf (2) eine Gasleitung (20) mit einem Gasdruckbehälter (21) aufweist, die im Bereich der Gummimuffe (23) des Drehgelenks endet und an der Gasleitung (20) eine Druckmessdose (30) zur Messung des Druckabfalls, die mit einer Steuerung (31), die den Prüfstand bei einem vorgegebenen Minimaldruck stoppt, verbunden ist, vorgesehen ist.
